# EUROPÄISCHE PATENTSCHRIFT

(11) **EP 2 060 823 B1**
(45) Veröffentlichungstag und Bekanntmachung des Hinweises auf die Patenterteilung: **26.09.2012**
(21) Anmeldenummer: 08019669.4
(22) Anmeldetag: 11.11.2008
(51) Int. Cl.: F16F 13/10

(54) **Hydrolager**
Hydraulic support
Support hydraulique

(30) Priorität: 15.11.2007 DE 102007054882
(43) Veröffentlichungstag der Anmeldung: 20.05.2009
(73) Patentinhaber: Carl Freudenberg KG, 69469 Weinheim (DE)
(72) Erfinder: Wittmershaus, Volker, 69488 Birkenau (DE); Sommer, Eberhard, 69483 Waldmichelbach (DE); Hirsch, Volker, 67346 Speyer (DE)

(56) Entgegenhaltungen:
- EP-A1- 1 081 409
- DE-A1- 19 829 233
- JP-A- 57 076 340

## Beschreibung

### Technisches Gebiet

Die Erfindung betrifft ein Hydrolager, umfassend ein Gehäuse, welches einen Arbeits- und einen Ausgleichsraum begrenzt, wobei Arbeits- und Ausgleichsraum durch eine Membran voneinander getrennt sind.

### Stand der Technik

Derartige Hydrolager sind z.B. aus der DE-A-198 29 233 allgemein bekannt. Die vorbekannten Hydrolager weisen ein Auflager und ein Traglager auf, welche durch einen Federkörper miteinander verbunden sind. Das Traglager ist dabei meist in das Gehäuse integriert und das Gehäuse und der Federkörper begrenzen einen Raum in dem der Arbeitsraum angeordnet ist. Dieser ist mit einem Fluid befüllt, welche bei dynamischer Beanspruchung in den Ausgleichsraum verdrängt wird, beziehungsweise zwischen Arbeits- und Ausgleichsraum schwingt. Hydrolager werden beispielsweise zur Lagerung von Motoren in Karosserien von Kraftfahrzeugen eingesetzt und sollen dort die durch den Motor verursachten Schwingungen dämpfen. Zur Erzielung einer optimalen Dämpfung müssen die Komponenten des Hydrolagers an die Charakteristik des Motors angepasst werden.

### Darstellung der Erfindung

Der Erfindung liegt die Aufgabe zugrunde, ein Hydrolager bereitzustellen, dessen Schwingungsdämpfung und Schwingungstilgung besonders einfach modifizierbar ist und welches Schwingungen so dämpft, dass die Geräuschentwicklung verringert ist.

Diese Aufgabe wird mit den Merkmalen nach Anspruch 1 gelöst. Auf vorteilhafte Ausgestaltungen nehmen die Unteransprüche Bezug.

Zur Lösung der Aufgabe ist zwischen Arbeits- und Ausgleichsraum eine strömungsführende Einrichtung vorgesehen, die zu der Membran in funktionstechnischer Reihenschaltung steht. Die strömungsführende Einrichtung beeinflusst wie auch die Membran die zwischen dem Arbeits- und Ausgleichsraum hin und her schwingende Fluidsäule. Ein Ziel des erfindungsgemäßen Hydrolagers ist es, bei dynamischer Beanspruchung eine schwach gedämpfte Eigenschwingung im Fluid auszubilden, die hochfrequent die dynamische Steifigkeit des Hydrolagers in einem bestimmten Frequenzbereich gezielt und signifikant absenkt. Hierbei ist vorteilhaft, dass bestimmte störende Resonanzen der Fahrzeuginnengeräusche auslösenden Schwingungen durch ein in dem Resonanzbereich weiches Lager gezielt bekämpft werden können. Durch das erfindungsgemäße Hydrolager können also Geräusch auslösende Schwingungen des Motors besser vom übrigen Fahrzeug isoliert werden. Dieses zweite Ziel wird durch Anordnen und Auslegen der strömungsführenden Einrichtung erreicht. Dabei wird die Geometrie der strömungsführenden Einrichtung so ausgelegt, dass die Tilgerschwingung des Fluids gerade so weit gedämpft wird, dass diese dem Freiweg der in dem Gehäuse gelagerten Membran entspricht. Dadurch schlägt diese kaum noch in den Anschlägen des Gehäuses an und verursacht weniger Geräusche.

Die Einrichtung ist benachbart zu der Membran im Ausgleichsraum angeordnet sein. Die strömungsführende Einrichtung bildet mit der Membran eine eigenständige Baugruppe, durch die der Frequenzbereich und auch der Betrag der Absenkung der dynamischen Steifheit des Hydrolagers bestimmt werden. Durch Änderung der Geometrie eines der beiden Bauelemente kann der Frequenzbereich und der Betrag der Absenkung variiert werden. Wesentliche andere Bauteile, wie der Federkörper und die Anschläge, bleiben unverändert. Zusätzlich kann eine weitere strömungsführende Einrichtung, beispielsweise ein Dämpfungskanal vorgesehen sein, der die Membran umgibt, wobei diese Elemente in Wirkverbindung zueinander stehen. In dem Dämpfungskanal bildet sich eine schwach gedämpfte Eigenschwingung des in dem Dämpfungskanal befindlichen Fluids aus, die niederfrequent gegen die Starrkörper-Eigenschwingung des zu lagernden Aggregats in der elastischen Lagerung durch die Federkörper des Hydrolagers wirkt. Für verschiedene Anwendungen ist die Verwendung von Gleichteilen möglich, wodurch sich die Herstellungskosten reduzieren.

Die Einrichtung umfasst zumindest einen zylindrischen Kanal . Ein zylindrischer Kanal ist besonders einfach herstellbar. Zur Beeinflussung der Strömung des Fluids kann die Wandung des Kanals unterschiedliche Geometrien aufweisen. Die Wandung kann beispielsweise vollständig oder teilweise gerade, konkav oder konvex gewölbt sein. Die Einrichtung kann einen großen oder mehrere kleine Kanäle, beispielsweise Bohrungen, aufweisen. Bei einer Ausbildung der Einrichtung mit mehreren kleinen Kanälen ergibt sich ein größerer Reibungswiderstand als bei einer Ausführung mit nur einem Kanal und damit ein anderes Dämpfungsverhalten gegenüber dem Fluid. Des Weiteren erfolgt die Abstimmung des Kanals durch Variation der Länge und der Querschnittsfläche der Einrichtung.

Die Einrichtung kann einen siebartigen Boden aufweisen. Der siebartige Boden verändert ebenfalls das Dämpfungsverhalten der Einrichtung gegenüber dem Fluid. Der Boden kann eine variable Dicke aufweisen, wodurch sich bei einem dünnen Boden eine siebartige Struktur und bei einem dicken Boden eine kanalförmige Struktur mit einer Vielzahl von Kanälen ergibt.

Die Membran ist als starres Bauteil ausgebildet sein und der Freiweg der Membran kann auf der dem Arbeits- und dem Ausgleichsraum zugewandten Seite durch jeweils eine Anschlagkontur begrenzt sein. Die Anschlagkontur begrenzt den Freiweg der Membran. Durch die Ausbildung der Membran als starres Bauteil reduziert sich die Nachgiebigkeit der Membran und die Membran sperrt besser bei großen Schwingungsamplituden.

Die Anschlagkonturen können dem Außenumfang der Membran zugeordnet sein. Es ist bekannt, den Anschlag durch Gitter auszubilden, die beidseitig der Membran im Gehäuse festgelegt sind. Wird die Membran durch nur außen liegende Anschlagkonturen fixiert, treten geringere Reibungsverluste bei der Bewegung der Membran auf, was die Auslegung eines bei dynamischer Beanspruchung weichen Hydrolagers ermöglicht. Dadurch ergibt sich eine gute Ausbildung des Tilgereffektes.

Die Anschlagkonturen können der Mitte der Membran zugeordnet sein. Bei dieser Ausführung ergeben sich die gleichen Vorteile wie bei der oben beschriebenen Zuordnung der Anschlagkonturen am Rand der Membran. Diese Anordnung ermöglicht jedoch eine von der Membran unabhängige Auslegung des dem Randbereich des Hydrolagers zugeordneten Bereiches.

Die Membran kann zumindest eine Durchbrechung aufweisen. Eine Durchbrechung, beispielsweise eine Bohrung, ermöglicht einen teilweisen Druckausgleich bei einem plötzlich auftretenden hohen, durch Druckstöße verursachten, Druckunterschied zwischen Arbeitsraum und Ausgleichsraum. Dadurch werden Druckspitzen begrenzt und es wird ein Druckschlag und damit Geräuschbildung vermieden.

In der Durchbrechung kann eine Scheibe aus elastomerem Material angeordnet sein. In dieser Ausführung werden die oben beschriebenen Druckunterschiede durch Verformung des elastomeren Materials ausgeglichen.

In der Scheibe kann eine weitere Durchbrechung oder ein Schlitz angeordnet sein. Der Schlitz kann dabei so ausgeführt sein, dass sich die in dem Schlitz gegenüber liegenden Wände berühren oder voneinander beabstandet sind. Eine plötzlich auftretende, durch einen Druckstoß verursachte Druckdifferenz, zwischen Arbeits- und Ausgleichsraum verursacht in beiden Fällen eine Aufweitung des Schlitzes und dadurch einen Druckausgleich zwischen beiden Räumen. Der Schlitz wirkt dabei wie ein Überdruckventil, welches einen Druckausgleich erst beim Überschreiten einer bestimmten Druckdifferenz zulässt.

Die Membran kann zumindest einseitig Anschlagkörper aus elastomerem Material aufweisen. Der Anschlagkörper kann durch einen umlaufenden Wulst gebildet sein, der auf einer oder auf beiden Seiten der Membran angeordnet ist. Dadurch bildet der Anschlagkörper eine Dichtung welches sich jeweils an die Anschlagkontur des Gehäuses anlegt und ein Überströmen des Fluids weitgehend verhindert. Dadurch verbessert die Absperrwirkung der Membran bei großen Schwingungsamplituden. Ein weiterer Vorteil des Anschlagkörpers ist, dass durch das elastomere Material Druckstöße auch durch den Anschlagkörper aufgenommen werden können, was zu einer weiteren Geräuschreduzierung führt.

Über den Umfang der Membran verteilt mehrere Erhebungen aus elastomerem Material angeordnet sein. Diese Erhebungen können Teil des umlaufenden Wulstes sein oder auch von dem Wulst beabstandet auf der Membran angeordnet sein. Die Erhebungen, die beispielsweise als Noppen ausgebildet sein können, gelangen zuerst mit der Anschlagkontur des Gehäuses in Kontakt und bewirken eine die Bewegung der Membran verzögernde Kraftwirkung und verringern dadurch die Aufprallgeschwindigkeit der Membran und auch die Geräuschentwicklung. Die von dem Wulst oder zumindest von dem Grat des Wulstes beabstandet angeordneten Erhebungen haben den Vorteil, dass sie die Dichtwirkung der Membran am Wulst nicht beeinflussen.

Die Membran kann durch ein elastisches Verbindungselement mit dem Gehäuse verbunden sein. Durch das Verbindungselement wird die Membran zwischen den Anschlagkonturen und zentriert gehalten. Dadurch verringert sich die Reibung an den Kanten der Membran und ein Verkippen der Membran wird reduziert oder verhindert.

Das Verbindungselement kann mehrere über den Umfang der Membran verteilt angeordnete Stege umfassen, deren Anfangspunkt an der Membran festgelegt ist und deren Endpunkt am Gehäuse festgelegt ist. Dadurch ist die Membran trampolinartig an dem Gehäuse angebunden. Diese Befestigung ist sehr flexibel und der Einfluss der Stege auf die dynamischen Eigenschaften der Membran ist gering. Die Stege können auch so angeordnet sein, dass sie tangential von der Membran abragen. Dadurch verlängern sich die Stege und sie erhalten eine größere Nachgiebigkeit in Schwingungsrichtung, sie sind aber steif in der senkrecht dazu stehenden Ebene. Die Stege können sich bei dieser Ausgestaltung jeweils an den Endpunkten berühren.

Das Verbindungselement kann materialeinheitlich und einstückig mit den Anschlagkörpern ausgebildet sein. Zusätzlich können die Erhebungen ebenfalls integriert sein. Dadurch vereinfacht sich die Herstellung der mit den zusätzlichen Elementen versehenen Membran.

### Kurzbeschreibung der Zeichnung

Einige Ausführungsbeispiele des erfindungsgemäßen Hydrolagers werden nachfolgend anhand der Figuren näher erläutert. Diese zeigen, jeweils schematisch:
- Fig. 1: ein Hydrolager im Querschnitt;
- Fig. 2: ein Hydrolager gemäß Figur 1 mit einer konvex geformten Einrichtung;
- Fig. 3: ein Hydrolager gemäß Figur 1 mit mehreren Kanälen;
- Fig. 4: ein Hydrolager gemäß Figur 1 mit einem siebartigen Boden;
- Fig. 5: im Detail die außenumfangsseitig der Membran verlaufende Anschlagkontur;
- Fig. 6: im Detail die mittig der Membran verlaufende Anschlagkontur;
- Fig. 7: im Detail die Anschlagkörper die auf der Membranober- und - unterseite angeordnet sind;
- Fig. 8: im Detail in die Anschlagkörper integrierte Erhebungen;
- Fig. 9: verschiedene Ausgestaltungen der Erhebungen;
- Fig. 10: verschiedene Ausgestaltungen der Wulst;
- Fig. 11: im Detail eine Membran mit einer Durchbrechung;
- Fig. 12: eine Membran gemäß Fig. 11 mit einer in der Durchbrechung angeordneten Scheibe;
- Fig. 13: eine Membran gemäß Figur 12 mit einem in der Scheibe angeordneten Schlitz;
- Fig. 14: eine durch ein Verbindungselement an dem Gehäuse festgelegte Membran;
- Fig. 15: in der Draufsicht eine Membran mit tangential von der Membran abragenden Stege;
- Fig. 16: in der Draufsicht eine rechteckige Membran mit von der Membran abragenden Stege.

### Ausführung der Erfindung

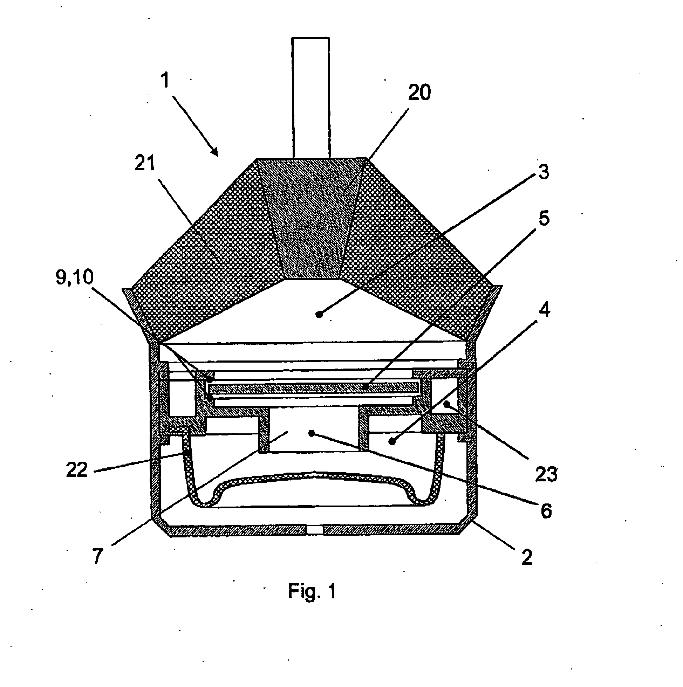

Figur 1 zeigt ein Hydrolager 1 zur Lagerung von Aggregaten, insbesondere Kraftfahrzeugmotoren. Das Hydrolager 1 besteht aus einem Gehäuse 2, welches das Auflager bildet und einem Traglager 20. Das Gehäuse 2 und das Traglager 20 sind durch einen Federkörper 21 miteinander verbunden. Gehäuse, Traglager 20 und Federkörper 21 begrenzen einen Arbeits- 3 und einen Ausgleichsraum 4, wobei Arbeits- 3 und Ausgleichsraum 4 durch eine Membran 5 voneinander getrennt sind. Der Ausgleichsraum 4 ist ferner durch eine drucklos Volumen aufnehmende weitere Membran 22 begrenzt. Zwischen Arbeits- 3 und Ausgleichsraum 4 ist eine strömungsführende Einrichtung 6 vorgesehen, welche benachbart zu der Membran 5 im Ausgleichsraum 4 angeordnet ist. Die Einrichtung 6 besteht in dieser Ausführung aus einem zylindrischen Kanal 7. Gemeinsam mit einem um der Membran 5 angeordneten Dämpfungskanal 23 bildet die Einrichtung 6 und die Membran 5 eine in Wirkverbindung stehende Baugruppe, die die dynamischen Eigenschaften des Hydrolagers 1 bestimmt. Die Membran 5 ist als starres Bauteil ausgebildet und der Freiweg der Membran 5 ist auf der dem Arbeits- 3 und dem Ausgleichsraum 4 zugewandten Seite durch jeweils eine Anschlagkontur 9, 10 begrenzt. Diese sind dem Außenumfang der Membran zugeordnet.

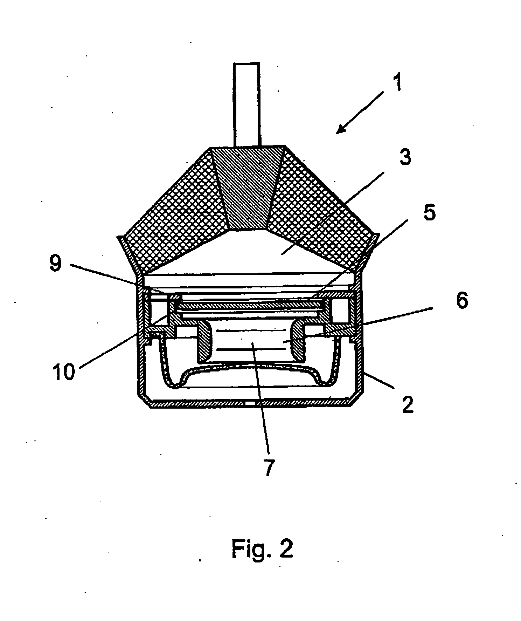

Figur 2 zeigt ein Hydrolager 1 gemäß Figur 1. In dieser Ausführung ist der Kanal 7 der Einrichtung 6 konvex ausgebildet.

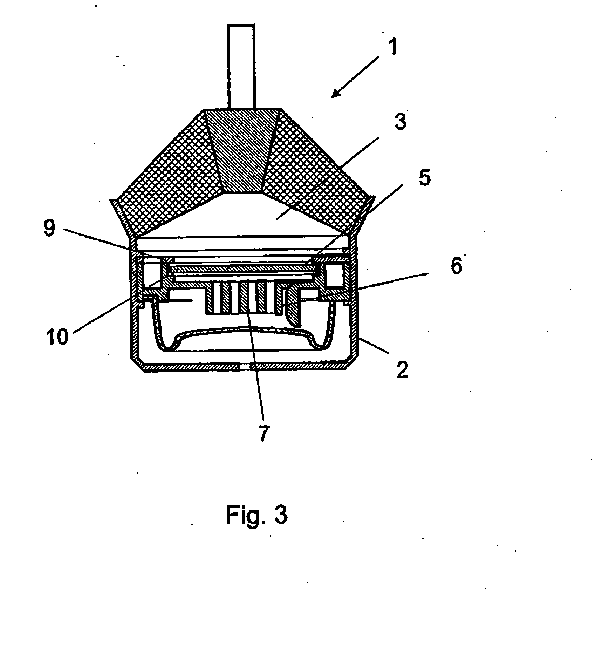

Figur 3 zeigt ein Hydrolager 1 gemäß Figur 1. In dieser Ausführung besteht die Einrichtung 6 aus mehreren parallel zueinander angeordneten Kanälen 7.

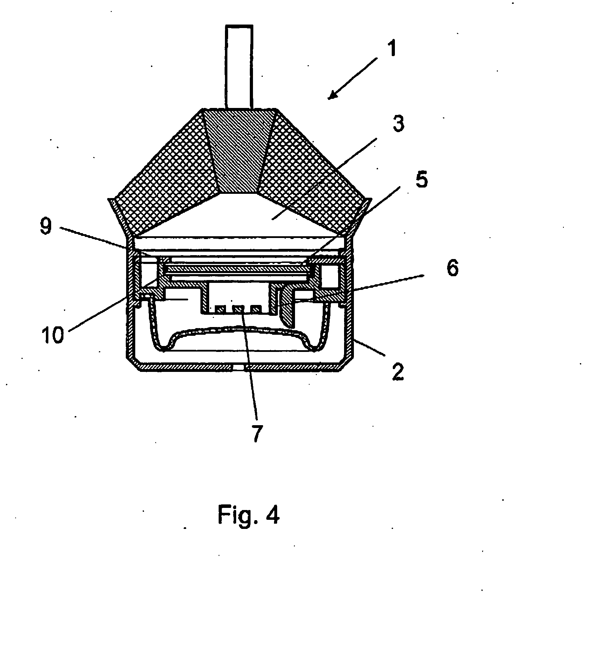

Figur 4 zeigt ein Hydrolager 1 gemäß Figur 1. In dieser Ausführung weist der Kanal 7 der Einrichtung 6 auf der dem Ausgleichsraum 4 zugewandten Seite einen siebartigen Boden 8 auf.

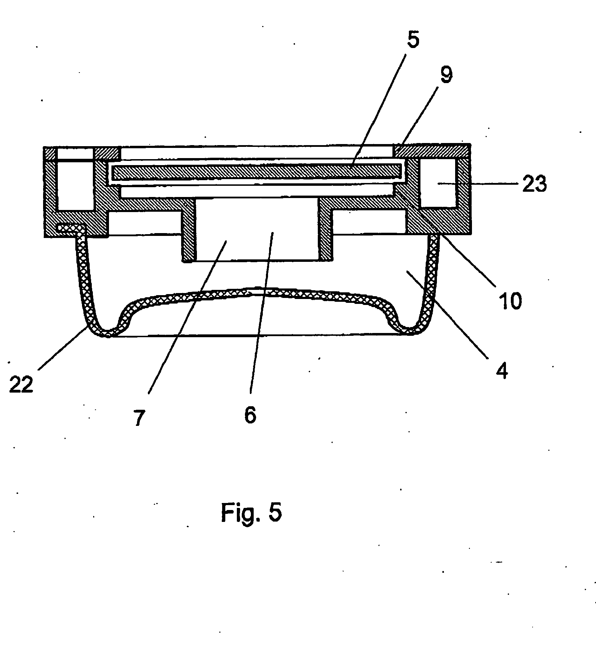

Figur 5 zeigt im Detail die Ausführung der Anschlagkonturen 9,10 wie sie in Figur 1 beschrieben sind.

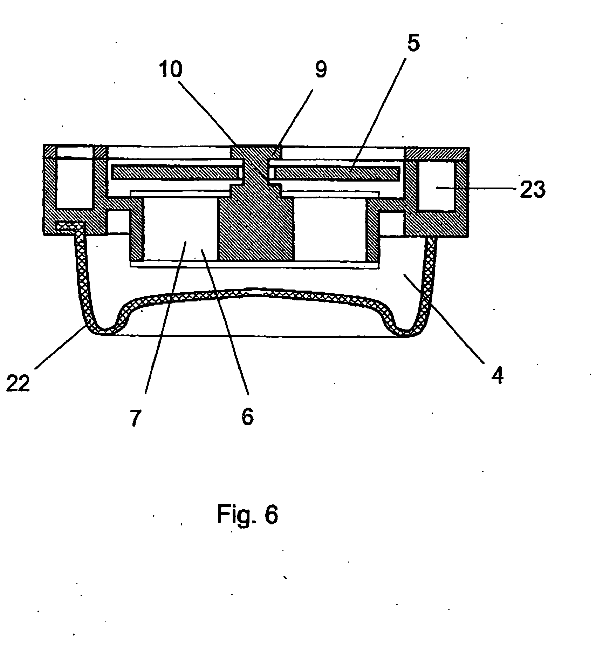

Figur 6 zeigt eine alternative Anordnung der Anschlagkonturen 9, 10 in einem Hydrolager gemäß Figur 1. In dieser Ausführung weist die Membran 5 in ihrer Mitte eine Durchbrechung 11 auf, wobei hier die Anschlagkonturen 9, 10 angeordnet sind, die somit der Mitte der Membran 5 zugeordnet sind.

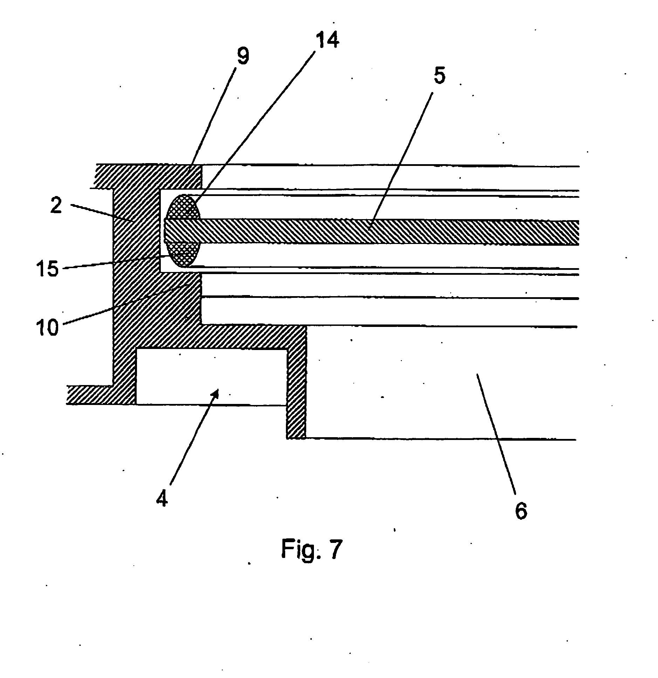

Figur 7 zeigt eine Membran 5 für ein Hydrolager 1 gemäß Figur 1. Der Rand der Membran 5 ist beidseitig zumindest mit umlaufenden Anschlagkörpern 14, 15 aus elastomerem Material versehen.

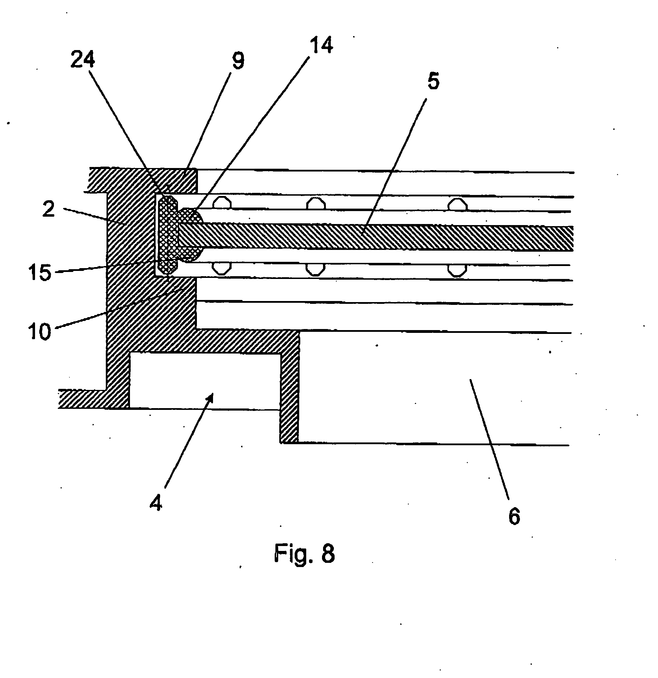

Figur 8 zeigt eine Membran 5 für ein Hydrolager 1 gemäß Figur 1. Der Rand der Membran 5 ist beidseitig zumindest mit umlaufenden Anschlagkörpern 14, 15 aus elastomerem Material versehen. Des Weiteren sind beide Anschlagkörper 14, 15 mit über den Umfang verteilt angeordneten Erhebungen 24 versehen, die über die Anschlagkörper 14, 15 hinausragen. Die Anschlagkörper 14, 15 und die Erhebungen sind materialeinheitlich und einstückig ausgebildet und über den Rand der Membran 5 miteinander verbunden.

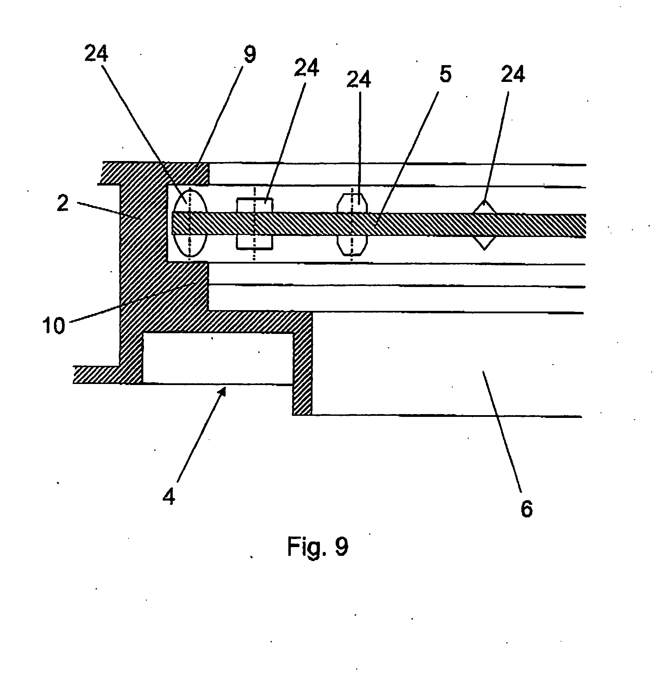

Figur 9 zeigt verschiedene Ausgestaltungen von Erhebungen 24 die zusammen mit umlaufenden Geometrien oder auch separat die Anschlagkörper 14, 15 bilden. Die Erhebungen 24 können parabelförmig, kugelkalottenförmig, zylinderfömig, kegelförmig oder kegelstumpfförmig ausgebildet sein. Es sind auch Kombinationen dieser Geometrien oder auch andere Geometrien denkbar.

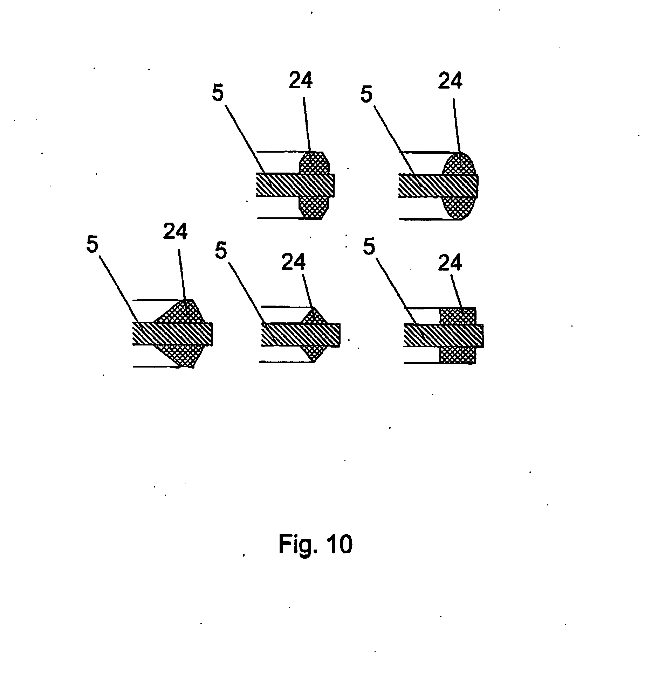

Figur 10 zeigt verschiedene Ausgestaltungen von umlaufend ausgebildeten Anschlagkörper 14, 15. Diese können parabelförmig, kreisabschnittfömig, rechteckförmig, dreieckförmig oder trapezförmig ausgebildet sein.

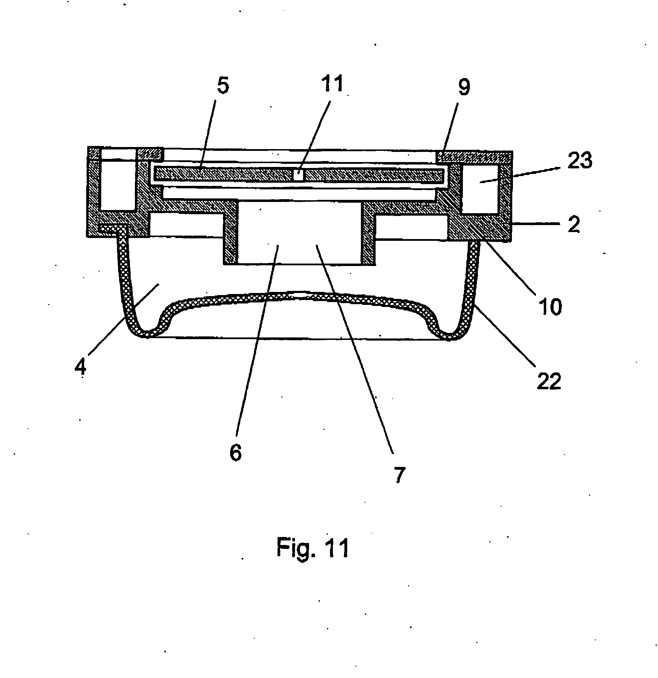

Figur 11 zeigt eine Membran 5 für ein Hydrolager 1 gemäß Figur 1. In dieser Ausgestaltung weist die Membran 5 eine mittig angeordnete Durchbrechung 11 auf, die dem Druckausgleich zwischen Arbeits- 3 und Ausgleichsraum 4 dient.

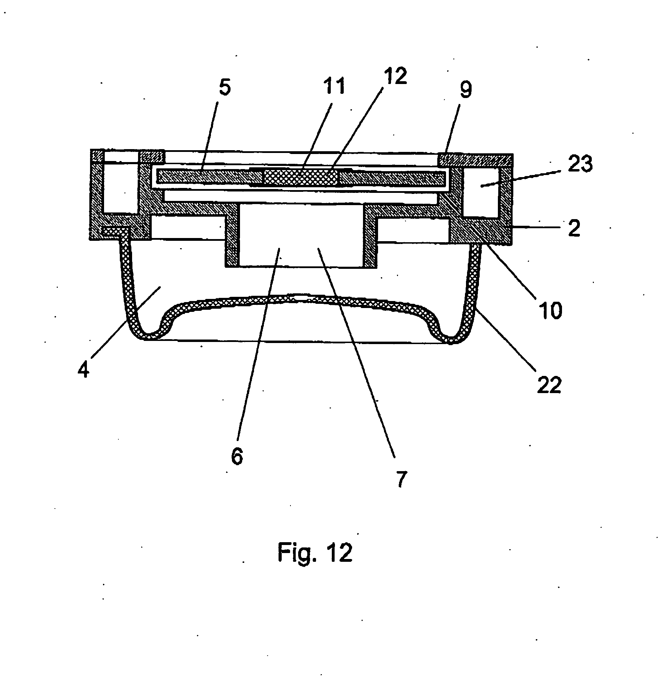

Figur 12 zeigt eine Membran 5 für ein Hydrolager 1 gemäß Figur 1. In dieser Ausgestaltung weist die Membran 5 eine mittig angeordnete Durchbrechung 11 auf, in der eine Scheibe 12 aus elastomerem Material angeordnet ist.

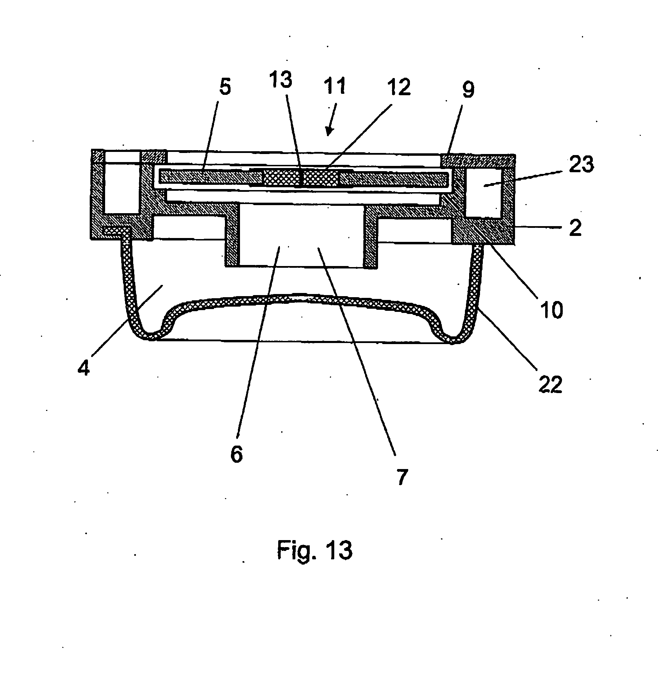

Figur 13 zeigt eine Membran 5 für ein Hydrolager 1 gemäß Figur 1. In dieser Ausgestaltung weist die Membran 5 eine mittig angeordnete Durchbrechung 11 auf, in der eine Scheibe 12 aus elastomerem Material angeordnet ist, wobei in
der Scheibe 12 ein Schlitz 13 angeordnet ist.

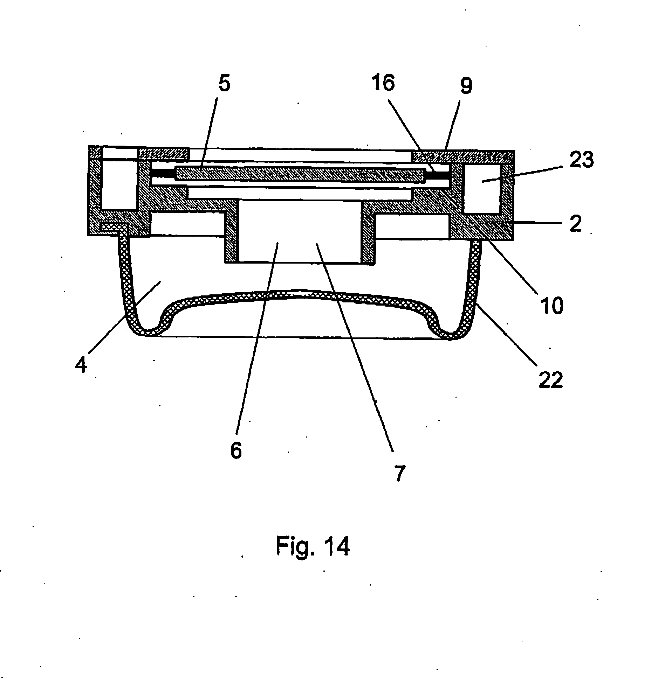

Figur 14 zeigt eine Membran 5 für ein Hydrolager 1 gemäß Figur 1, welche durch ein elastisches Verbindungselement 16 mit dem Gehäuse 2 verbunden ist.

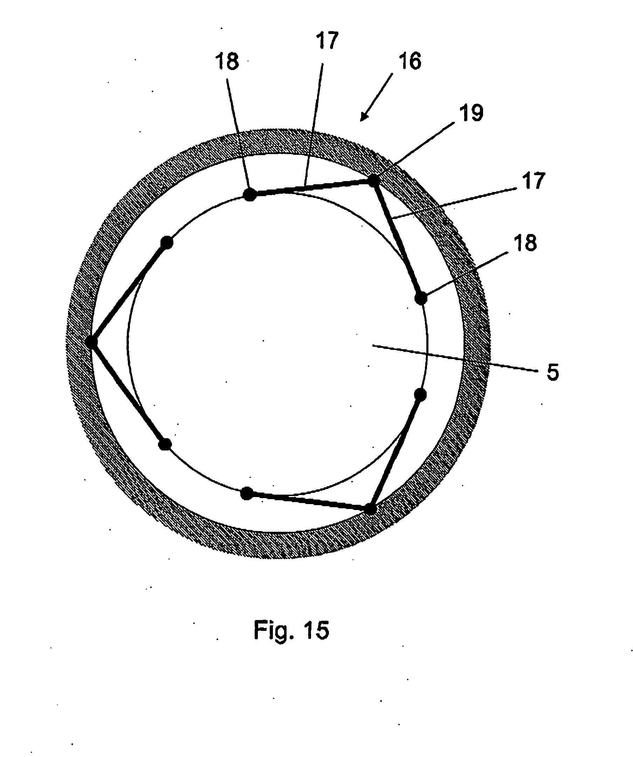

Figur 15 zeigt eine kreisförmige Membran mit einem Verbindungselement 16, bestehend aus mehreren über den Umfang der Membran 5 verteilt angeordnete Stege 17. Der Anfangspunkt 18 ist an der Membran 5 festgelegt und verläuft tangential von der Membran 5 in Richtung des Gehäuses. Der Endpunkt 19 der Stege 17 ist am Gehäuse 2 festgelegt. Das Verbindungselement 16 ist materialeinheitlich und einstückig mit den Anschlagkörpern 14, 15 ausgebildet. Die Stege 17 sind an ihren Endpunkten 19 miteinander verbunden und können dadurch formschlüssig im Gehäuse 2 festgelegt werden.

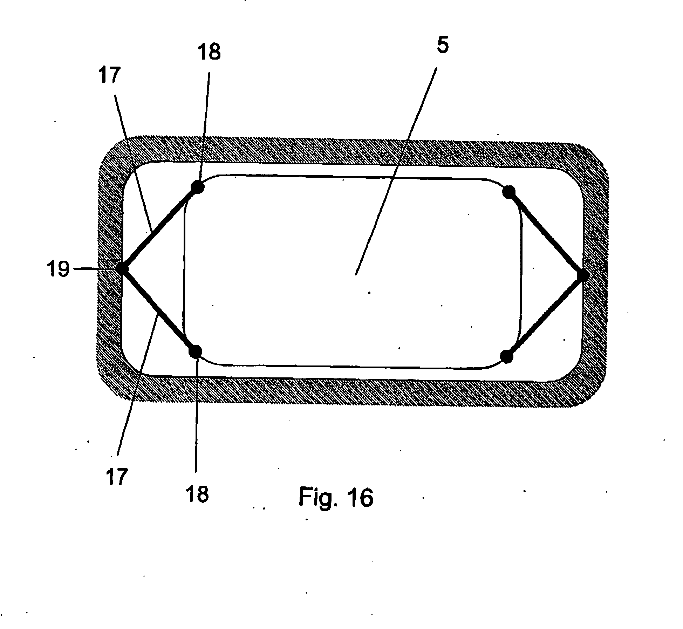

Figur 16 zeigt eine Membran 5 gemäß Figur 15. In dieser Ausgestaltung weist die Membran 5 allerdings eine rechteckige Grundfläche mit abgerundeten Kanten auf. Die Stege 17 sind an den Schmalseiten der Membran 5 im Bereich der Ecken angebracht und sind an ihren Endpunkten 19 miteinander verbunden.

## Patentansprüche

1. Hydrolager (1) umfassend ein Gehäuse (2), welches einen Arbeits- (3) und einen Ausgleichsraum (4) begrenzt, wobei Arbeits- (3) und Ausgleichsraum (4) durch eine als starres Bauteil ausgebildete und in ihrem Freiweg durch Anschlagkonturen (9, 10) begrenzte Membran (5) voneinander getrennt sind, **dadurch gekennzeichnet, dass** benachbart zu der Membran im Ausgleichsraum (4) eine strömungsführende Einrichtung (6) vorgesehen ist, die zumindest einen zylindrischen Kanal (7) umfasst, und die in funktechnischer Reihenschaltung zu der Membran steht, wobei die Geometrie der strömungsführenden Einrichtung (6) so ausgelegt ist, dass die Tilgerschwingung des Fluids so gedämpft ist, dass diese dem Freiweg der Membran (5) entspricht.

2. Hydrolager nach Anspruch 1, **dadurch gekennzeichnet, dass** die Einrichtung (6) einen siebartigen Boden (8) aufweist.

3. Hydrolager nach Anspruch 1, **dadurch gekennzeichnet, dass** die Anschlagkonturen (9, 10) dem Außenumfang der Membran zugeordnet sind.

4. Hydrolager nach Anspruch 1, **dadurch gekennzeichnet, dass** die Anschlagkonturen (9, 10) der Mitte der Membran (5) zugeordnet sind.

5. Hydrolager nach Anspruch 1 bis 4, **dadurch gekennzeichnet, dass** die Membran (5) zumindest eine Durchbrechung (11) aufweist.

6. Hydrolager nach Anspruch 5, **dadurch gekennzeichnet, dass** in der Durchbrechung (11) eine Scheibe (12) aus elastomerem Material angeordnet ist.

7. Hydrolager nach Anspruch 6, **dadurch gekennzeichnet, dass** in der Scheibe (12) eine weitere Durchbrechung (13) oder Schlitz angeordnet ist.

8. Hydrolager nach Anspruch 1 bis 7, **dadurch gekennzeichnet, dass** die Membran (5) zumindest einseitig Anschlagkörper (14, 15) aus elastomerem Material aufweist.

9. Hydrolager nach Anspruch 8, **dadurch gekennzeichnet, dass** die Anschlagkörper (14, 15) durch einen umlaufenden Wulst gebildet sind.

10. Hydrolager nach Anspruch 1 bis 9, **dadurch gekennzeichnet, dass** mehrere Erhebungen (24) aus elastomerem Material über den Umfang der Membran verteilt angeordnet sind.

11. Hydrolager nach Anspruch 1 bis 10, **dadurch gekennzeichnet, dass** die Membran (5) durch ein elastisches Verbindungselement (16) mit dem Gehäuse (2) verbunden ist, wobei das Verbindungselement (16) mehrere über den Umfang der Membran (5) verteilt angeordnete Stege (17) umfasst, deren Anfangspunkt (18) an der Membran (5) und deren Endpunkt (19) am Gehäuse (2) festgelegt ist.

12. Hydrolager nach Anspruch 11, **dadurch gekennzeichnet, dass** das Verbindungselement (16) materialeinheitlich und einstückig mit den Anschlagkörpern (14, 15) ausgebildet ist.

## Claims

1. Hydraulic mount (1) comprising a housing (2) which delimits a working chamber (3) and a compensation chamber (4), wherein the working chamber (3) and compensation chamber (4) are separated from one another by a diaphragm (5) which is formed as a rigid component and which is delimited in terms of its free travel by stop contours (9, 10), **characterized in that** a flow-guiding device (6) is provided, adjacent to the diaphragm, in the compensation chamber (4), which device comprises at least one cylindrical duct (7) and is connected functionally in series with the diaphragm, wherein the geometry of the flow-guiding device (6) is configured such that the absorber vibration of the fluid is dampened so as to correspond to the free travel of the diaphragm (5).

2. Hydraulic mount according to Claim 1, **characterized in that** the device (6) has a screen-like base (8).

3. Hydraulic mount according to Claim 1, **characterized in that** the stop contours (9, 10) are assigned to the outer circumference of the diaphragm.

4. Hydraulic mount according to Claim 1, **characterized in that** the stop contours (9, 10) are assigned to the centre of the diaphragm (5).

5. Hydraulic mount according to Claim 1 to 4, **characterized in that** the diaphragm (5) has at least one aperture (11).

6. Hydraulic mount according to Claim 5, **characterized in that** a disc (12) composed of elastomeric material is arranged in the aperture (11).

7. Hydraulic mount according to Claim 6, **characterized in that** a further aperture (13) or slot is arranged in the disc (12).

8. Hydraulic mount according to Claim 1 to 7, **characterized in that** the diaphragm (5) has, at least on one side, stop bodies (14, 15) composed of elastomeric material.

9. Hydraulic mount according to Claim 8, **characterized in that** the stop bodies (14, 15) are formed by an encircling bead.

10. Hydraulic mount according to Claim 1 to 9, **characterized in that** a plurality of elevations (24) composed of elastomeric material are arranged so as to be distributed over the circumference of the diaphragm.

11. Hydraulic mount according to Claim 1 to 10, **characterized in that** the diaphragm (5) is connected to the housing (2) by an elastic connecting element (16), wherein the connecting element (16) comprises a plurality of webs (17) which are arranged so as to be distributed over the circumference of the diaphragm (5) and whose starting point (18) is fixed to the diaphragm (5) and whose end point (19) is fixed to the housing (2).

12. Hydraulic mount according to Claim 11, **characterized in that** the connecting element (16) is formed materially integrally and in one piece with the stop bodies (14, 15).

## Revendications

1. Palier hydraulique (1) comprenant un boîtier (2) qui délimite un espace de travail (3) et un espace d'équilibrage (4),
l'espace de travail (3) et l'espace d'équilibrage (4) étant séparés l'un de l'autre par une membrane (5) configurée comme composant rigide et dont le parcours de déplacement libre est délimité par des contours de butée (9, 10),
**caractérisé en ce que**
un dispositif (6) conduisant le courant et qui comporte au moins un canal cylindrique (7) est prévu dans l'espace d'équilibrage (4) au voisinage de la membrane et est connecté operativement en série à la membrane,
**en ce que** la géométrie du dispositif (6) conduisant le courant est conçue de telle sorte que les oscillations atténuées du fluide soient amorties de manière à correspondre au déplacement libre de la membrane (5).

2. Palier hydraulique selon la revendication 1, **caractérisé en ce que** le dispositif (6) présente un fond (8) en forme de tamis.

3. Palier hydraulique selon la revendication 1, **caractérisé en ce que** les contours de butée (9, 10) sont associés à la périphérie extérieure de la membrane.

4. Palier hydraulique selon la revendication 1, **caractérisé en ce que** les contours de butée (9, 10) sont associés au centre de la membrane (5).

5. Palier hydraulique selon les revendications 1 à 4, **caractérisé en ce que** la membrane (5) présente au moins une perforation (11).

6. Palier hydraulique selon la revendication 5, **caractérisé en ce qu'**un disque (12) en matériau élastomère est disposé dans la perforation (11).

7. Palier hydraulique selon la revendication 6, **caractérisé en ce qu'**une autre perforation (13) ou fente est disposée dans le disque (12).

8. Palier hydraulique selon les revendications 1 à 7, **caractérisé en ce que** la membrane (5) présente sur au moins un côté des corps de butée (14, 15) en matériau élastomère.

9. Palier hydraulique selon la revendication 8, **caractérisé en ce que** les corps de butée (14, 15) sont formés par un bourrelet périphérique.

10. Palier hydraulique selon les revendications 1 à 9, **caractérisé en ce que** plusieurs saillies (24) en matériau élastomère sont réparties à la périphérie de la membrane.

11. Palier hydraulique selon les revendications 1 à 10, **caractérisé en ce que** la membrane (5) est reliée par un élément élastique de liaison (16) au boîtier (2), l'élément de liaison (16) présentant plusieurs nervures (17) réparties à la périphérie de la membrane (5) et dont le point initial (18) est défini sur la membrane (5) et le point final (19) sur le boîtier (2).

12. Palier hydraulique selon la revendication 11, **caractérisé en ce que** l'élément de liaison (16) est formé du même matériau que les corps de butée (14, 15) et d'un seul tenant avec eux.
